# FASCICULE DE BREVET EUROPEEN

(11) **EP 1 297 983 B1**
(45) Date de publication et mention de la délivrance du brevet: **26.01.2005**
(21) Numéro de dépôt: 02292251.2
(22) Date de dépôt: 13.09.2002
(51) Int. Cl.: B60K 13/04, F01N 7/18, F16F 15/10

(54) **Ligne d'échappement de véhicule automobile, comportant un batteur inertiel**
Kraftfahrzeugabgasanlage mit inertialer Schwingungsdämpfungsmasse
Automotive vehicle exhaust line with inertial vibration dampening mass

(30) Priorité: 25.09.2001 FR 0112300
(43) Date de publication de la demande: 02.04.2003
(73) Titulaire: Renault s.a.s., 92100 Boulogne Billancourt (FR)
(72) Inventeur: Cuchet, Florent, 94100 Saint Maur des Fosses (FR)

(56) Documents cités:
- EP-A- 0 862 013
- EP-A- 1 132 645
- FR-A- 2 570 785
- FR-A- 2 710 381
- FR-A- 2 761 730

## Description

La présente invention se rapporte à une ligne d'échappement de véhicule automobile selon la préambule de la revendication 1, comme connu par FR-A-2 761 730 (un anneau souple sert aussi comme bateur).

Une ligne d'échappement comprend de façon usuelle un tuyau d'échappement, un support d'échappement fixé au tuyau d'échappement, et des moyens de suspension et de filtration montés entre le support d'échappement et la caisse du véhicule.

Les moyens de suspension et de filtration comprennent normalement un plot élastique avec deux armatures pour la fixation d'une part au support d'échappement et d'autre part à la caisse. Ces moyens sont montés sur le support d'échappement, l'ensemble étant relié à la caisse. L'emplacement de montage des moyens de suspension et de filtration est imposé par la structure de la caisse qui doit présenter une raideur suffisante pour autoriser le montage de la ligne d'échappement.

La ligne d'échappement peut par ailleurs comprendre un batteur inertiel.

Le rôle principal d'un tel batteur est de "contrer" les modes de vibrations acoustiques de la ligne d'échappement. Un tel batteur se compose habituellement d'une masse métallique enrobée de caoutchouc, montée sur la ligne d'échappement par l'intermédiaire d'une potence à un endroit optimum du point de vue acoustique.

Le batteur inertiel est habituellement espacé des moyens de suspension et de filtration.

Cela implique l'utilisation de moyens spécifiques pour fixer les moyens de suspension et de filtration au support d'échappement et pour fixer le batteur au tuyau d'échappement, et complique le montage et notamment le montage automatique de l'ensemble sous la caisse du véhicule.

En effet, ce montage automatique s'effectue à l'aide d'une table de montage automatique constituée par une platine sur laquelle sont placés tous les éléments devant être montés sous la caisse. La platine permet le bon positionnement des éléments les uns par rapport aux autres et la mise en place des différentes visseuses. Ensuite, l'ensemble est placé sous caisse, les différents éléments alors vissés sous la caisse, et la table de montage est retirée.

La présente invention vise une ligne d'échappement avec batteur inertiel permettant en particulier un montage simplifié, un coût réduit, une meilleure compacité sans que les performances de la ligne d'échappement ne soient affectées.

La ligne d'échappement de véhicule automobile objet de la présente invention comprend les caractéristiques de la revendication 1.

Il s'est avéré de façon surprenante que la mise en place du batteur inertiel sur la ligne d'échappement à l'endroit des moyens de suspension et de filtration n'entraîne pas de dégradation du fonctionnement du batteur inertiel tout en procurant une série d'avantages parmi lesquels il convient de mentionner en particulier la facilité d'intégration du batteur sur la ligne d'échappement ainsi que la suppression de moyens spécifiques de fixation pour le batteur et pour les moyens de suspension et de filtration.

De préférence, dans le cadre de l'invention, les moyens de suspension et de filtration comprennent deux armatures reliées entre elles par un plot élastique et l'armature côté tuyau d'échappement comprend une partie formant bride intercalée entre le batteur et le support d'échappement, le batteur, la bride et le support d'échappement étant assemblés par une vis de fixation.

La vis de fixation peut être avantageusement engagée depuis le batteur, à travers un trou de passage de la bride, dans un trou taraudé du support d'échappement.

Pour permettre un positionnement isostatique de la ligne d'échappement sur la table de montage automatique dans une direction perpendiculaire à la caisse du véhicule, le trou de passage dans la bride peut être une boutonnière allongée dans une direction correspondante.

Le batteur peut de préférence comporter, pour la vis de fixation, un trou de passage étagé présentant du côté éloigné du support de suspension un lamage avec un épaulement pour la tête de la vis.

Pour faciliter le vissage, le diamètre du lamage peut être choisi en fonction de la tête de la vis et de l'accessoire de vissage prévu sur la visseuse de manière que le lamage serve de guide pour la visseuse.

En se référant aux dessins annexés, on va décrire ci-après plus en détail deux modes de réalisation illustratifs et non-limitatifs d'une ligne de suspension suivant la présente invention; sur les dessins:
la figure 1 est une coupe d'un mode de fixation d'un batteur inertiel et d'une bride de plot de suspension et de filtration sur un support de suspension, montrant également la tête de la visseuse;
la figure 2 est une coupe correspondante d'un mode de réalisation avec des moyens anti-rotation.

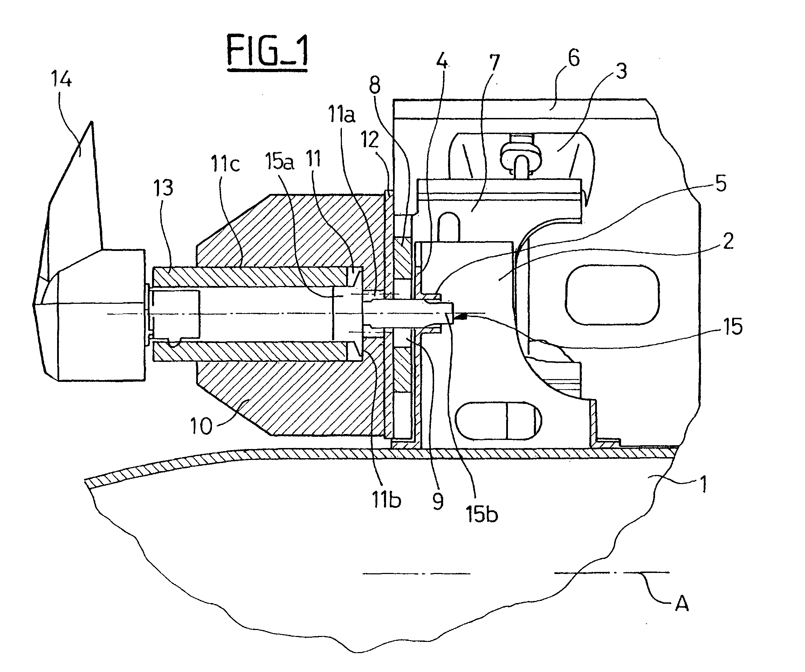

On reconnaît sur la figure 1 une partie de tuyau d'échappement 1 portant un support d'échappement 2 fixé par exemple par soudage au tuyau 1 sur le côté tourné vers la caisse non représentée du véhicule, sous laquelle la ligne d'échappement doit être montée à l'aide d'un plot de suspension et de filtration 3 élastique.

Le support 2 comporte, perpendiculairement à l'axe longitudinal A du tuyau 2, une face de fixation 4 plane dans laquelle est pratiqué un trou de passage taraudé 5.

Le plot de suspension et de filtration 3 comprend d'une part une armature 6 métallique pour la fixation à la caisse du véhicule et d'autre part une armature métallique 7 pour la fixation au support 2, l'armature 7 comportant à cet effet une partie 8 formant bride, percée d'un trou de passage 9.

Un batteur inertiel 10 de préférence en forme de corps de révolution, percé d'un trou de passage axial 11 comporte à une extrémité un interface 12 en forme de rondelle. Le trou de passage 11 est un trou étagé comprenant du côté de l'interface 12 une portion 11a de petit diamètre se raccordant par un épaulement 11b à une portion 11c de grand diamètre (lamage).

Pour l'assemblage de la ligne d'échappement comprenant le tuyau d'échappement 1, le plot de suspension 3 avec ses armatures 6 et 7 et le batteur 10, on positionne les trois éléments sur une table de montage non représentée, la bride 8 étant intercalée entre la face 4 du support 2 fixé au tuyau 1 et l'interface 12 du batteur 10, les trous 5, 9 et 11 étant alignés. On positionne, dans la douille 13 d'une visseuse 14, la tête 15a d'une vis de fixation 15 et on engage la tige filetée 15b de la vis 15 à travers le trou 11 du batteur 10 et le trou 9 de la bride 8 de l'armature 7 du plot 3 dans le trou taraudé 5 de la face 4 du support 2, en plaquant la douille 13 de la visseuse 14, le batteur 10 et la bride 8 contre la face 4 du support 2, et on amorce le vissage dans le trou taraudé 5, cette opération étant facilitée par le guidage de la douille 13 de la visseuse 14 dans le lamage 11c constitué par la portion de grand diamètre du trou 11.

L'opération de vissage une fois terminée, la vis de fixation 15 solidarise en un ensemble homogène le batteur 11 avec l'armature 7 du plot de suspension et de filtration 3 et le support d'échappement 2.

Il est à noter que le trou de passage 9 dans la bride 8 de l'armature 7 du plot 3 peut être constitué avantageusement par une boutonnière allongée dans une direction perpendiculaire à la caisse du véhicule, ce qui permet une position isostatique de la ligne d'échappement sur la table de montage, les dispersions dans cette direction du tuyau d'échappement et du support d'échappement étant absorbées par la boutonnière.

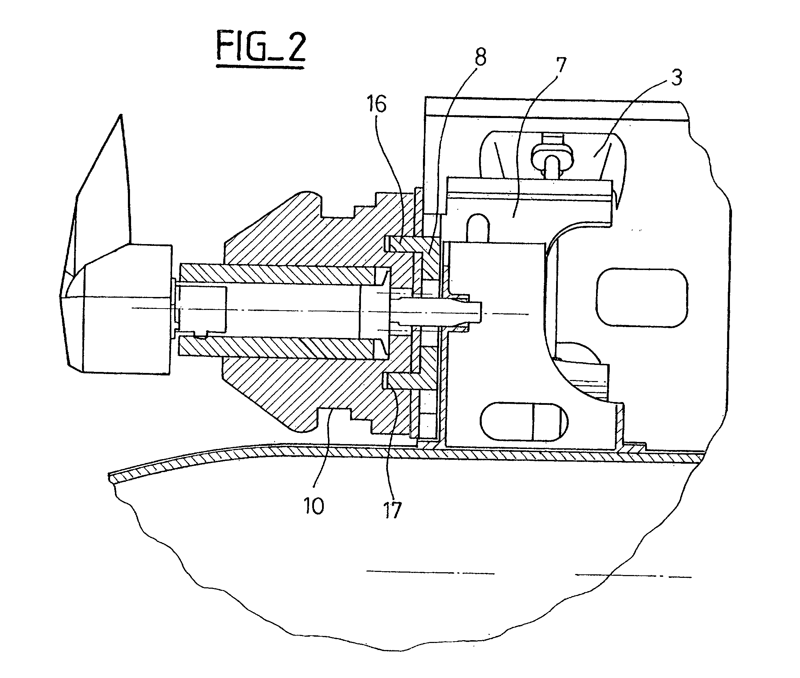

Le mode de réalisation illustré par la figure 2 diffère de celui de la figure 1 par la prévision, sur la bride 8 de l'armature 7 du plot 3, du côté du batteur 10, de saillies 16 qui, en coopérant avec des empreintes femelles 17 de forme correspondantes du batteur 10, font office de moyen anti-rotation.

Il convient de remarquer que le batteur inertiel pourrait en principe présenter une forme autre que de révolution, mais la forme de révolution est préférable dans la mesure où elle dispense de toute disposition d'indexation et d'immobilisation en rotation pendant le montage.

La vis de fixation 15 pourrait également comporter un tête autre que la tête 15a à empreinte extérieure, auquel cas la douille 13 de la visseuse serait remplacée par un autre accessoire ou embout ou par un porte-accessoire de vissage susceptible d'être guidé dans le lamage 11c du trou 11 du batteur 10.

## Revendications

1. Ligne d'échappement de véhicule automobile comprenant un tuyau d'échappement (1), un support d'échappement (2) fixé au tuyau d'échappement, des moyens de suspension et de filtration (3) montés entre le support d'échappement et la caisse du véhicule, et un batteur inertiel (10), le batteur inertiel (10) étant fixé au tuyau d'échappement (1) à l'endroit du support d'échappement (2), **caractérisée par le fait que** les moyens (15) de fixation du batteur (10) au tuyau d'échappement (1) à l'endroit du support d'échappement assurant également la fixation des moyens de suspension et de filtration (3) au support d'échappement (2).

2. Ligne d'échappement suivant la revendication 1, **caractérisée par le fait que** les moyens de suspension et de filtration comprennent deux armatures (6, 7) reliées entre elles par un plot élastique (3) et l'armature (7) côté tuyau d'échappement comprend une partie formant bride (8) intercalée entre le batteur (10) et le support de d'échappement (2), le batteur, la bride et le support d'échappement étant assemblés par une vis de fixation (15).

3. Ligne d'échappement suivant la revendication 2, **caractérisée par** le fait la vis de fixation (15) est engagée depuis le batteur (10), à travers un trou de passage (9) de la bride (8), dans un trou taraudé (5) du support d'échappement (2).

4. Ligne d'échappement suivant la revendication 3, **caractérisée par le fait que** le trou de passage (9) dans la bride (8) est une boutonnière allongée dans une direction perpendiculaire à la caisse du véhicule.

5. Ligne d'échappement suivant la revendication 3, **caractérisée par le fait que** le batteur (10) comporte, pour la vis de fixation (15), un trou de passage (11) étagé présentant du côté éloigné du support d'échappement (2) un lamage (11c) pour la tête (15a) de la vis.

6. Ligne d'échappement suivant la revendication 5, **caractérisée par le fait que** le diamètre du lamage (11c) est choisi en fonction de la tête (15a) de la vis de fixation (15) et de l'accessoire de vissage (13) d'une visseuse de manière que le lamage serve de guide pour la visseuse.

7. Ligne d'échappement suivant l'une quelconque des revendications 2 à 6, **caractérisée par le fait que** la bride (8) de l'armature (7) du plot de suspension et de filtration (3) présente, du côté du batteur (10), au moins une saillie (16) qui, en coopérant avec au moins une empreinte femelle (17) de forme correspondante du batteur (10), fait office de moyen anti-rotation.

## Claims

1. A motor vehicle exhaust system comprising an exhaust pipe (1), an exhaust support (2) fixed to the exhaust pipe, suspension and filtration means (3) mounted between the exhaust support and the body of the vehicle, and an inertia damper (10), the inertia damper (10) being fixed to the exhaust pipe (1) at the location of the exhaust support (2), **characterised in that** the means (15) for fixing the damper (10) to the exhaust pipe (1) at the location of the exhaust support also provide for fixing of the suspension and filtration means (3) to the exhaust support (2).

2. An exhaust system according to claim 1 **characterised in that** the suspension and filtration means comprise two fitments (6, 7) connected together by an elastic projection (3) and the fitment (7) at the exhaust pipe side comprises a flange-forming portion (8) interposed between the damper (10) and the exhaust support (2), the damper, the flange and the exhaust support being assembled by a fixing screw (15).

3. An exhaust system according to claim 2 **characterised in that** the fixing screw (15) is engaged from the damper (10) through a through hole (9) in the flange (8) into a screwthreaded hole (5) in the exhaust support (2).

4. An exhaust system according to claim 3 **characterised in that** the through hole (9) in the flange (8) is a slot which is elongate in a direction perpendicular to the body of the vehicle.

5. An exhaust system according to claim 3 **characterised in that** for the fixing screw (15) the damper (10) has a stepped through hole (11) having at the side remote from the exhaust support (2) a spot facing (11c) for the head (15a) of the screw.

6. An exhaust system according to claim 5 **characterised in that** the diameter of the spot facing (11c) is selected in dependence on the head (15a) of the fixing screw (15) and the screwing tool (13) of a screwing device in such a way that the spot facing serves as a guide for the screwing device.

7. An exhaust system according to any one of claims 2 to 6 **characterised in that** the flange (8) of the fitting (7) of the suspension and filtration projection (3) has, on the side of the damper (10), at least one protrusion (16) which, co-operating with at least one female recess (17) of corresponding shape in the damper (10), serves as an anti-rotation means.

## Patentansprüche

1. Kraftfahrzeugabgasanlage, umfassend ein Auspuffrohr (1), einen Auspuffträger (2), befestigt an das Auspuffrohr, Mittel zur Aufhängung und zur Filtrierung (3), befestigt zwischen dem Auspuffträger und dem Gehäuse des Fahrzeugs, und eine inerte Schwingungsdämpfungsmasse (10), wobei die Schwingungsdämpfungsmasse (10) an das Auspuffrohr (1) befestigt ist am Ort des Auspuffträgers (2),
**dadurch gekennzeichnet, dass** die Mittel (15) zur Befestigung der Schwingungsdämpfungsmasse (10) an das Auspuffrohr (1) am Ort des Auspuffträgers gleichfalls die Befestigung von Mitteln zur Aufhängung und zur Filtrierung (3) an den Auspuffträger (2) sicherstellen.

2. Abgasanlage gemäß Anspruch 1, **dadurch gekennzeichnet, dass** die Mittel zur Aufhängung und zur Filtrierung zwei Armaturen (6, 7) umfassen, die untereinander durch einen elastischen Block (3) verbunden sind, und die Armierung (7) an der Seite des Auspuffrohrs umfasst einen Abschnitt, welcher einen Flansch (8) bildet, der zwischen die Schwingungsdämpfungsmasse (10) und den Auspuffträger (2) eingeschoben ist, wobei die Schwingungsdämpfungsmasse, der Flansch und der Auspuffträger durch eine Befestigungsschraube (15) zusammengefügt sind.

3. Abgasanlage gemäß Anspruch 2, **dadurch gekennzeichnet, dass** die Befestigungsschraube (15) von der Schwingungsdämpfungsmasse (10) durch ein Durchloch (9) des Flansches (8) mit einem mit einem Gewinde versehenen Loch (5) des Auspuffträgers (2) in Eingriff ist.

4. Abgasanlage gemäß Anspruch 3, **dadurch gekennzeichnet, dass** das Durchloch (9) in dem Flansch (8) ein Knopfloch ist, das in einer zum Gehäuse des Fahrzeugs rechtwinkligen Richtung verlängert ist.

5. Abgasanlage gemäß Anspruch 3, **dadurch gekennzeichnet, dass** die Schwingungsdämpfungsmasse (10) für die Befestigungsschraube (15) ein gestuftes Durchloch (11) umfasst, welches auf der verlängerten Seite des Auspuffträgers (2) eine Führung (11c) für den Kopf (15a) der Schraube aufweist.

6. Abgasanlage gemäß Anspruch 5, **dadurch gekennzeichnet, dass** der Durchmesser der Führung (11c) gewählt ist in Abhängigkeit von dem Kopf (15a) der Befestigungsschraube (15) und dem Verschraubungszubehör (13) eines Schraubers, derart, dass die Führung als Führung für den Schrauber dient.

7. Abgasanlage gemäß einem der Ansprüche 2 bis 6, **dadurch gekennzeichnet, dass** der Flansch (8) der Armierung (7) des Blocks der Aufhängung und der Filtrierung (3) auf der Seite der Schwingungsdämpfungsmasse (10) wenigstens einen Vorsprung (16) aufweist, der, indem er mit wenigstens einer weiblichen Vertiefung (17) von entsprechender Form der Schwingungsdämpfungsmasse (10) zusammenwirkt, das Amt der Anti-Rotationsmittel ausübt.
